# EUROPÄISCHE PATENTSCHRIFT

(11) **EP 2 910 970 B1**
(45) Veröffentlichungstag und Bekanntmachung des Hinweises auf die Patenterteilung: **05.10.2016**
(21) Anmeldenummer: 15154591.0
(22) Anmeldetag: 11.02.2015
(51) Int. Cl.: G01S 17/42, G01S 7/481

(54) **Laserscanner**
Laser scanner
Lecteur laser

(30) Priorität: 25.02.2014 EP 14156567
(43) Veröffentlichungstag der Anmeldung: 26.08.2015
(73) Patentinhaber: SICK AG, 79183 Waldkirch (DE)
(72) Erfinder: Eisele, Florian, 79108 Freiburg (DE); Pfleger, Thomas, 79183 Waldkirch (DE)
(74) Vertreter: Rieger, Daniel-Stephan

(56) Entgegenhaltungen:
- US-A1- 2001 030 754
- US-A1- 2006 087 640

## Beschreibung

Die vorliegende Erfindung betrifft einen Laserscanner gemäß dem Oberbegriff von Anspruch 1.

Die DE 20 2007 009 157 U1 offenbart einen optoelektronischen Sensor mit einem entfernungsauflösenden Bildsensor und einem Sensorgehäuse als Zylindersegment, wobei mehrere Sensoren formschlüssig nebeneinander angeordnet sind, so dass diese ein gemeinsames größeres Zylindersegment bilden.

Die DE 43 40 756 offenbart eine Laserabstandsermittlungseinrichtung nach dem Impulslaufzeitverfahren mit einem Impulslaser zur Aussendung von Lichtimpulsen und einer mechanischen Lichtablenkvorrichtung zum Ablenken der Lichtimpulse in verschiedene Winkelrichtungen.

Weitere optoelektronische Sensoren sind aus US 2006/087640 A1 und US 2001/030754 A1 vorbekannt.

Eine Aufgabe der Erfindung besteht darin, einen einfachen und preiswerten Sensor bereitzustellen, der ohne mechanisch bewegliche Teile auskommt, der keinem mechanischen Verschleiß unterliegt und eine lange Lebensdauer aufweist.

Die Aufgabe wird gemäß Anspruch 1 gelöst mit einem Laserscanner mit mindestens einem Sendeelement und mindestens einem Empfangselement und einer Steuer- und Auswerteeinheit zur Auswertung der Lichtlaufzeit von Lichtstrahlen vom Sendeelement über ein Objekt zum Empfangselement, wobei eine Vielzahl von Sendeelementen und/oder eine Vielzahl von Empfangselementen kreisabschnittsförmig oder teilkreisförmig in einer Reihe in einem gemeinsamen Gehäuse angeordnet sind, wobei die Lichtstrahlen in verschiedenen Winkelrichtungen fächerförmig ausgesendet und/oder empfangen werden, wobei sich die Abstände der ausgesendeten Lichtstrahlen der Sendeelemente mit größer werdendem Abstand zum Laserscanner vergrößern und/oder die Abstände der empfangenen Lichtstrahlen der Empfangselemente mit kleiner werdendem Abstand zum Laserscanner verkleinern.

Die optischen Achsen der ausgesendeten bzw. empfangenen Lichtstrahlen haben einen gemeinsamen Ursprung, beispielsweise einen punktförmigen Ursprung im Gehäuse des Laserscanners. Auch die optischen Achsen der Sendeelemente bzw. Empfangselemente haben einen gemeinsamen Ursprung, bzw. einen gemeinsamen punktförmigen Ursprung im Gehäuse des Laserscanners.

Die ausgesendeten Lichtstrahlen der Sendeelemente entfernen sich also beim Aussenden in Richtung der ausgesendeten Lichtstrahlen immer mehr voneinander. Die empfangenen Lichtstrahlen der Empfangselemente laufen fächerförmig zusammen, wobei sich die Abstände zwischen den Lichtstrahlen in Richtung der empfangenen Lichtstrahlen verkleinern.

Eine Frontscheibe des Laserscanners ist dabei in dem Gehäuse angeordnet. Die Frontscheibe bildet dabei eine konvexe Oberfläche an der Außenseite des Gehäuses. Die gesendeten Lichtstrahlen werden dabei fächerförmig auseinanderlaufend ausgesendet.

Gemäß der Erfindung werden die Lichtstrahlen in verschiedenen Winkelrichtungen fächerförmig ausgesendet bzw. empfangen, wodurch ein Überwachungsbereich dahingehend einfach untersucht werden kann, ob Objekte in dem Überwachungsbereich vorhanden sind oder nicht und an welcher Stelle, d. h. in welcher Entfernung die Objekte vorhanden sind. Weiter können die Objekte vermessen werden, bzw. eine Umgebungskontur und deren Veränderung erfasst werden. Durch die fächerförmige Aussendung der Lichtstrahlen, bzw. das fächerförmige Empfangen wird der Überwachungsbereich innerhalb einer fächerförmigen Ebene überwacht. Die Sendeelemente bzw. Empfangselemente sind gemäß der Erfindung im Umfang eines Zylinders radialsymmetrisch angeordnet. Der Laserscanner kann mit einer hohen Winkelgenauigkeit hergestellt werden, da die Sendeelemente und Empfangselemente fest fixiert sind und die Lichtstrahlen direkt, ohne bewegliche Teile in den Überwachungsbereich gelangen. Bei der Produktion des Laserscanners kann die Winkelgenauigkeit der Winkelrichtungen geprüft und eingestellt werden. Dadurch ist gewährleistet, dass jeder Laserscanner eine bestimmte geforderte mindeste Winkelgenauigkeit einhält.

Der erfindungsgemäße Laserscanner ist daher einfach und preiswert aufgebaut. Da der Laserscanner ohne mechanisch bewegliche Teile auskommt, weist dieser keinen mechanischen Verschleiß auf und besitzt eine lange Lebensdauer. Beispielsweise kann eine geforderte Einsatzdauer von beispielsweise ca. 20 Jahren mit dem erfindungsgemäßen Laserscanner erfüllt werden.

Da der Laserscanner ohne bewegliche Teile auskommt, die beispielsweise beim Einsatz in Fahrzeugen Beschleunigungen ausgesetzt sein können, ist der erfindungsgemäße Laserscanner unempfindlicher gegen Schwing- und Schockbelastungen und kann daher problemlos in mechanisch bewegten Objekten wie Fahrzeugen insbesondere Flurförderfahrzeugen eingesetzt werden. Dadurch, dass der Laserscanner ohne bewegliche Teile auskommt, kann der Laserscanner auch sehr kompakt ausgeführt werden.

In Weiterbildung der Erfindung sind die Empfangselemente von Photoempfängern als Zeilenelemente gebildet. Durch die Verwendung von Zeilenelementen können die Photoempfänger sehr dicht angeordnet werden. Dadurch kann der Laserscanner zum einen sehr kompakt ausgebildet werden und zum anderen kann der Laserscanner auch mit einer sehr hohen Auflösung ausgebildet werden, da die Empfangselemente sehr dicht beieinander liegen. Das Substrat der Zeilenelemente ist dabei so dünn ausgeführt, dass sich das Zeilenelement einer Krümmung anpassen kann.

Für die Sendeelemente können z. B. VCSEL-Laserdioden oder Leistungs-LED verwendet werden. Das Sendelicht oder Sendesignal kann pulsförmig sein, dessen Lichtlaufzeit ausgewertet wird. Das Sendelicht oder Sendesignal kann beispielsweise auch ein Sinusburst Signal sein, dessen Phasenlage zum empfangenen Reflexsignal bestimmt wird.

In einer bevorzugten Ausführungsform sind die Sendeelemente und/oder Empfangselemente entlang des Teilkreises äquidistant angeordnet. Dadurch ist eine gleichmäßige Auflösung des Laserscanners zur Detektion von Objekten gewährleistet. Je nach gewünschtem Auflösungsvermögen des Laserscanners können die Sendeelemente und/oder Empfangselemente in größeren oder kleineren Abständen äquidistant angeordnet werden.

In Weiterbildung der Erfindung sind die Sendeelemente und/oder die Empfangselemente in einer Matrix mit mindestens zwei Reihen angeordnet. Dadurch wird der bisher fächerförmig in einer Ebene überwachte Überwachungsbereich in einer weiteren Dimension erweitert, so dass gemäß der Weiterbildung der Erfindung ein teilzylindrischer Überwachungsbereich überwacht werden kann. Gemäß der Weiterbildung ist es dabei vorgesehen, dass Sendeelemente und Empfangselemente alternierend angeordnet sind. Dadurch ist immer ein Sendeelement benachbart zu einem Empfangselement angeordnet. Beispielsweise werden die Sendelemente in einer ersten Zeile angeordnet und die Empfangselemente in einer parallel benachbarten Zeile. Anschließend an die Zeile mit den Empfangselementen erfolgt wieder parallel eine Zeile mit Sendeelementen und parallel eine Zeile mit Empfangselementen. Dieser Aufbau kann zur Vergrößerung des Überwachungsbereichs erweitert werden.

In einer besonderen Ausführungsform sind die Sendeelemente und/oder Empfangselemente in einem Vollkreis angeordnet. Dadurch ist ein ringförmiger oder auch ein hohlzylindrischer Überwachungsbereich realisierbar. Vorteilhaft wird dadurch ein Schutzfeld mit einer Winkelausdehnung von 360° realisiert. Die Lichtstrahlen werden dabei in einem Winkelbereich von 360° von den Sendeelementen ausgesendet und in einem Winkelbereich von 360° von den Empfangselementen empfangen. Beispielsweise ist ein einziges Zeilenelement in einem 360° Vollkreis angeordnet. Dabei ist das Substrat der Zeilenelemente so dünn ausgeführt, dass sich das Zeilenelement einer Krümmung des Vollkreises anpassen kann.

In Weiterbildung der Erfindung sind die Sendeelemente und/oder die Empfangselemente auf einer flexiblen Leiterplatte angeordnet. Dadurch lässt sich der Laserscanner sehr preiswert herstellen. Die flexible Leiterplatte wird in einem ersten Arbeitsschritt mit den Sendeelementen und/oder mit den Empfangselementen bestückt. Anschließend wird die flexible Leiterplatte auf einem Teilkreiszylinder oder einem Zylinder montiert, so dass die Sendeelemente und/oder Empfangselemente kreisabschnittsförmig oder teilkreisförmig angeordnet sind.

In Weiterbildung der Erfindung sind die Sendeelemente und/oder die Empfangselemente auf einem starren teilkreisförmigen, kreisabschnittsförmigen, kreisförmigen, teilzylinderförmigen, zylinderförmigen, teilkugelförmigen, kugelabschnittsförmigen oder kugelförmigen Kunststoffträger mit integrierten Leiterplatten angeordnet. Bei dem starren Kunststoffträger handelt es sich um eine dreidimensionale starre Leiterplatte, welche direkt mit den Sendeelementen oder den Empfangselementen bestückt wird. Beispielsweise kann der Kunststoffträger als hochintegriertes MID-Teil (Molded Inter-connected Device bzw. spritzgegossener Schaltungsträger) hergestellt sein. Als Molded Interconnect Devices, kurz MID, werden elektronische Bauteile bezeichnet, bei denen metallische Leiterbahnen auf und innerhalb spritzgegossener Kunststoffträger integriert werden.

In Weiterbildung der Erfindung ist pro Winkelgrad mindestens ein Sendeelement und/oder mindestens ein Empfangselement angeordnet. Dadurch ist pro Winkelgrad mindestens ein Entfernungsmesswert verfügbar. Bei der Verwendung von mehr als einem Sendeelement und/oder Empfangselement pro Winkelgrad wird die Auflösung weiter erhöht. Bei beispielsweise einer Pixelbreite von 20 µm und einem Zylinderradius von 30 mm kann so eine Winkelauflösung von 0,38° erreicht werden.

In Weiterbildung der Erfindung ist vor jedem Sendeelement und/oder Empfangselement mindestens eine Linse oder Mikrolinse angeordnet. Durch die Mikrolinse wird der vom Sendeelement ausgehende Lichtstrahl geeignet fokussiert, wodurch ein Lichtstrahldurchmesser beeinflussbar ist und der Lichtstrahl energetisch gebündelt werden kann. Bei dem Empfangselement wird der empfangene Lichtstrahl auf das Empfangselement abgebildet, wodurch eine empfindlichere Auswertung der empfangenen Lichtsignale möglich wird. Die Linsen oder Mikrolinsen können refraktive oder diffraktive Linsen sein. Auch die optischen Achsen der Linsen bzw. Mikroslinsen haben einen gemeinsamen Ursprung, bzw. einen gemeinsamen punktförmigen Ursprung im Gehäuse des Laserscanners.

In Weiterbildung der Erfindung bilden die Linsen oder Mikrolinsen ein Linsensystem. Das Linsensystem besteht beispielsweise aus mehreren hintereinander angeordneten Linsen, die entweder einem einzigen Sendeelement oder Empfangselement zugeordnet sind, oder es kann gemäß der Weiterbildung der Erfindung auch vorgesehen sein, dass ein Linsensystem als Systemoptik vor mehreren Sendeelementen und/oder Empfangselementen angeordnet ist.

Die Sendeelemente werden von der Steuer- und Auswerteeinheit angesteuert. Dabei kann es sich insbesondere um einen Logikbaustein, insbesondere vom Typ CPLD (Complex Programmable Logic Device) oder FPGA (Field Programmable Gate Array) handeln. Die Steuer- und Auswerteeinheit kann auch durch einen DSP (Digitalen Signal Prozessor) gebildet sein. Zur Reduktion der gegenseitigen Beeinflussung der Empfangselemente erfolgt die Steuerung der Sendeelemente segmentiert und/oder sequentiell. Das zum Sendeelement zugehörige Empfangselement wird dabei synchron ausgewertet.

Weiter werden die Empfangselemente von der Steuer- und Auswerteeinheit ausgewertet. Gemäß der Erfindung kann jedoch auch für die Sendeelemente und für die Empfangselemente eine getrennte Steuereinheit und eine getrennte Auswerteeinheit vorgesehen werden, die über eine Schnittstelle miteinander verbunden sind. Gemäß der Erfindung ist es möglich, wenn ein ausreichend großer Winkelabstand zwischen Empfangselementen eingehalten wird, Empfangselemente ohne gegenseitige Beeinflussung gleichzeitig durch die Steuer- und Auswerteeinheit auszuwerten. Es kann dabei also jedes n-te Empfangselement gleichzeitig, also parallel ausgewertet werden und so die Scanzeit erheblich reduziert werden.

Die Erfindung wird nachstehend auch hinsichtlich weiterer Vorteile und Merkmale unter Bezugnahme auf die beigefügte Zeichnung anhand von Ausführungsbeispielen erläutert. Die Figuren der Zeichnung zeigen in:
- Figur 1: eine schematische Ansicht eines Laserscanner mit Sendeelementen;
- Figur 2: den Laserscanner aus Figur 1 mit dargestellten Empfangselementen;
- Figur 3: eine schematische Darstellung der Sendeelemente und Empfangselemente aus Figur 1 in einer Seitenansicht;
- Figur 4: einen Laserscanner mit einem 360° Scanbereich;
- Figur 5: einen Laserscanner mit einem Scanbereich von ca. 210°;
- Figur 6 und 7: einen weiteren Laserscanner mit einem Scanbereich von ca. 210°;
- Figur 8 und 9: eine schematische Darstellung eines Laserscanners mit einem Scanbereich von 90°;
- Figur 10 bis 12: eine schematische Darstellung eines Laserscanners mit kreiszylindrischem Scanbereich von 360°;
- Figur 13: eine schematische Darstellung eines Laserscanners mit einem kugelförmigen, halbkugelförmigen oder teilkugelförmigen Scanbereich.

In den nachfolgenden Figuren sind identische Teile mit identischen Bezugszeichen versehen.

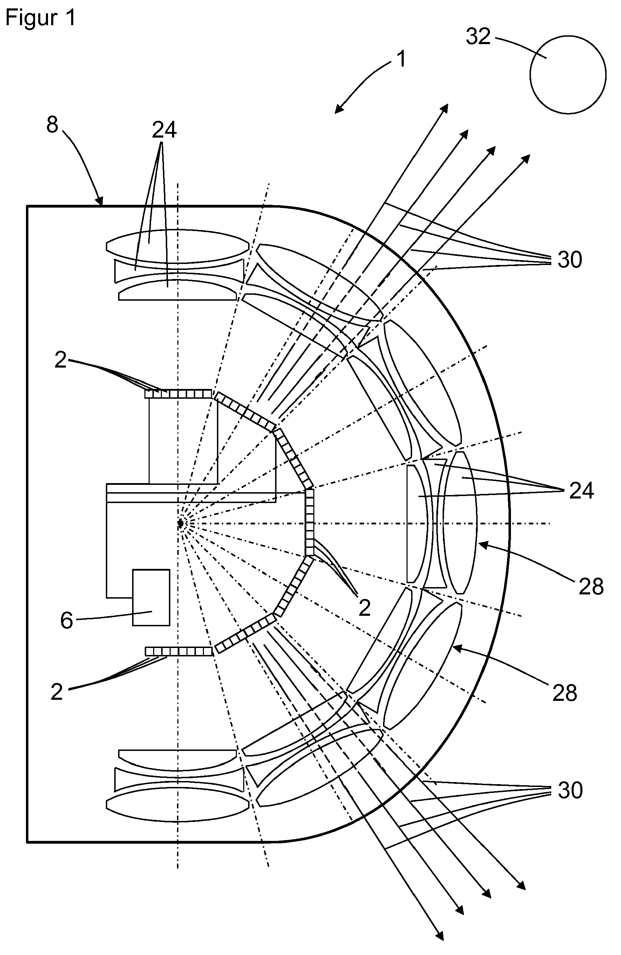

Figur 1 bis 3 zeigen schematisch den erfindungsgemäßen Laserscanner 1 mit mindestens einem Sendeelement 2 und mindestens einem Empfangselement 4 und einer Steuer- und Auswerteeinheit 6 zur Auswertung der Lichtlaufzeit des Lichtes bzw. von Lichtstrahlen 30 vom Sendeelement 2 über ein Objekt 32 zum Empfangselement 4, wobei eine Vielzahl von Sendeelementen 2 und/oder eine Vielzahl von Empfangselementen 4 kreisabschnittsförmig oder teilkreisförmig in einer Reihe in einem gemeinsamen Gehäuse 8 angeordnet sind, wobei das Licht in verschiedenen Winkelrichtungen fächerförmig ausgesendet und/oder empfangen wird, wobei sich die Abstände der ausgesendeten Lichtstrahlen der Sendeelemente mit größer werdendem Abstand zum Laserscanner vergrößern und/oder die Abstände der empfangenen Lichtstrahlen der Empfangselemente mit kleiner werdendem Abstand zum Laserscanner verkleinern.

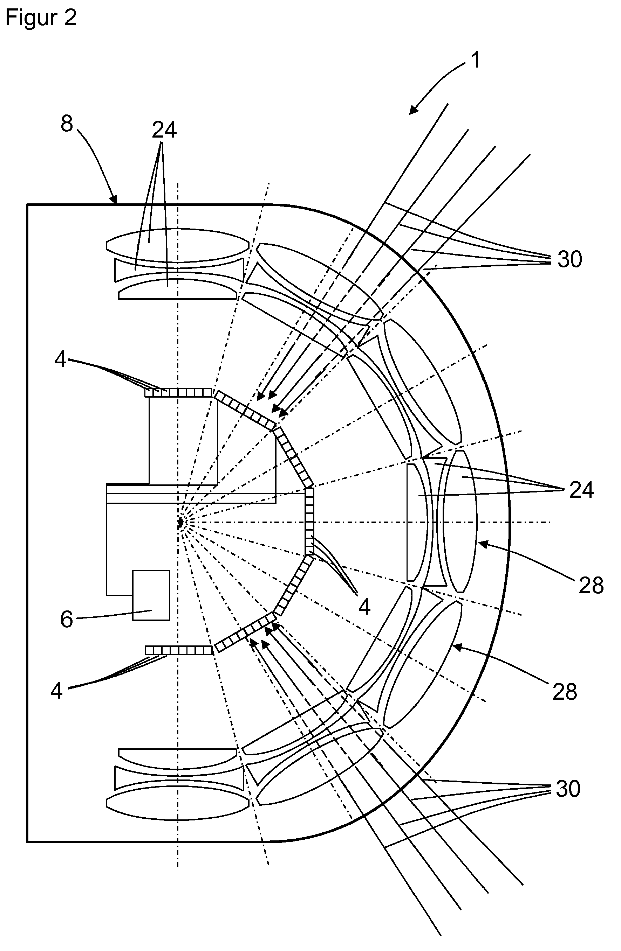

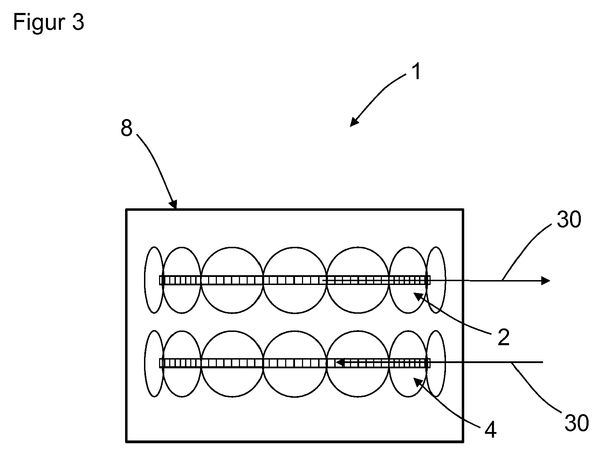

Figur 3 zeigt den Laserscanner 1 aus Figur 1 und 2 in einer Frontansicht direkt auf die halbkreisförmige Gehäuseseite. Die Sendeelemente 2 gemäß Figur 1 und die Empfangselemente 4 gemäß Figur 2 sind dabei gemäß Figur 3 beispielsweise in zwei separaten parallelen Reihen übereinander angeordnet. Dabei ist beispielsweise jeweils einem Sendeelement 2 jeweils ein Empfangselement 4 zugeordnet. Das Gehäuse 8 ist dabei mindestens in dem Gehäuseabschnitt für die Sendeelemente 2 und die Empfangselemente 4 transparent ausgebildet, so dass die Lichtstrahlen 30 durch das Gehäuse 8 hindurchtreten können. Beispielsweise weist das Gehäuse 8 des Laserscanners 1 in diesem Abschnitt eine lichtdurchlässige Frontscheibe auf.

Figur 1 zeigt dabei schematisch die Anordnung der Sendeelemente 2. Diese sind kreisabschnittsförmig oder teilkreisförmig in einem Halbkreis angeordnet. Vor den Sendeelementen 2 sind Linsen 24 angeordnet, die ein Linsensystem 28 bilden. Die Linsen 24 sind gemäß Figur 1 beispielsweise für jeweils 8 Sendeelemente vorgesehen. Die Linsen 24 sind derart ausgebildet und angeordnet, dass die Lichtstrahlen 30 der Sendeelemente 2 fächerförmig mit gleichmäßigen Winkelabständen ausgesendet werden. Es können jedoch auch Linsen 24 für jede natürlich Zahl von Sendeelementen 2 bzw. Empfangselementen 4 vorgesehen sein. So kann beispielsweise vor jedem Sendeelement 2 bzw. Empfangselement 4 eine Linse 24 oder ein Linsensystem 28 angeordnet werden. Es kann auch vorgesehen sein, dass vor einer, insbesondere geraden Anzahl von Sendeelementen 2 bzw. Empfangselementen 4, eine Linse 24 oder ein Linsensystem 28 angeordnet ist.

Die Steuer- und Auswerteeinheit 6 ist mit allen Sendeelementen 2 verbunden und ist in der Lage, alle Sendeelemente 2 anzusteuern. Die Sendeelemente 2 können dabei beispielsweise über ein Bussystem angesteuert werden. Es kann auch vorgesehen sein, dass die Sendeelemente 2 eine Schieberegisterstruktur bilden.

Über die Steuer- und Auswerteeinheit 6 werden die Sendeelemente 2 beispielsweise derart angesteuert, dass diese nacheinander kurze Lichtimpulse aussenden, deren Laufzeit vom Aussenden bis zum Empfang über die Empfangselemente 4 gemessen wird, nachdem diese von einem Objekt 32 reflektiert wurden. Dadurch kann von der

Steuer- und Auswerteeinheit 6 der Abstand von Objekten 32 in einem Überwachungsbereich bestimmt bzw. ausgewertet werden.

Neben der Lichtlaufzeitmessung kann der Laserscanner 1 auch nach dem Prinzip der Phasenmessung arbeiten.

Figur 2 zeigt den identischen Laserscanner 1 aus Figur 1 mit den Empfangselementen 4. Die Empfangselemente 4 sind kreisabschnittsförmig oder teilkreisförmig in einem Halbkreis angeordnet. Vor den Empfangselementen 4 sind Linsen 24 angeordnet, die ein Linsensystem 28 bilden. Die Linsen 24 sind gemäß Figur 2 beispielsweise für jeweils 8 Empfangselemente vorgesehen. Die Linsen 24 sind derart ausgebildet und angeordnet, dass die Lichtstrahlen 30 fächerförmig mit gleichmäßigen Winkelabständen von den Empfangselementen 4 empfangen werden können. Bei beispielsweise einer Pixelbreite von 20 µm und einem Teilkreis- oder Zylinderradius von 30 mm kann so eine Winkelauflösung von 0,38° erreicht werden.

Die Steuer- und Auswerteeinheit 6 ist mit allen Empfangselementen 4 verbunden und ist in der Lage, alle Empfangselemente 4 auszuwerten. Die Empfangselemente 4 können dabei beispielsweise über ein Bussystem angesteuert und ausgewertet werden. Es ist auch vorgesehen, dass die Empfangselemente 4 eine Schieberegisterstruktur bilden. Jedoch ist es bevorzugt, dass mehrere beabstandete Empfangselemente parallel ausgewertet werden.

Beispielsweise sind die Empfangselemente 4 gemäß Figur 2 von Photoempfängern als Zeilenelemente gebildet. Weiter sind die Sendeelemente 2 und die Empfangselemente 4 entlang des Teilkreises äquidistant angeordnet.

Beispielsweise sind die Sendeelemente 2 und die Empfangselemente 4 auf einer flexiblen Leiterplatte angeordnet. Es kann jedoch auch vorgesehen sein, die Sendeelemente 2 und/oder die Empfangselemente 4 auf einem starren teilkreisförmigen, kreisabschnittsförmigen, kreisförmigen, teilzylinderförmigen, zylinderförmigen, teilkugelförmigen, kugelabschnittsförmigen oder kugelförmigen Kunststoffträger mit integrierten Leiterplatten anzuordnen.

In den Figuren 1 und 2 ist die Steuer- und Auswerteeinheit 6 dargestellt. Diese Steuer- und Auswerteeinheit 6 ist beispielsweise ein Logikbaustein, insbesondere vom Typ CPLD (Complex Programmable Logic Device) oder FPGA (Field Programmable Gate Array). Weiter kann die Steuer- und Auswerteeinheit auch durch einen DSP, nämlich einen digitalen Signalprozessor gebildet sein.

Gemäß Figur 1 bis 3 ist der fächerförmige Scanbereich ca. 210°. Es können auch andere fächerförmige Scanbereiche von 1 bis 360°, beispielsweise 90°, 180°, 270° oder fächerförmige Scanbereiche in einem beliebigen Winkelbereich realisiert werden.

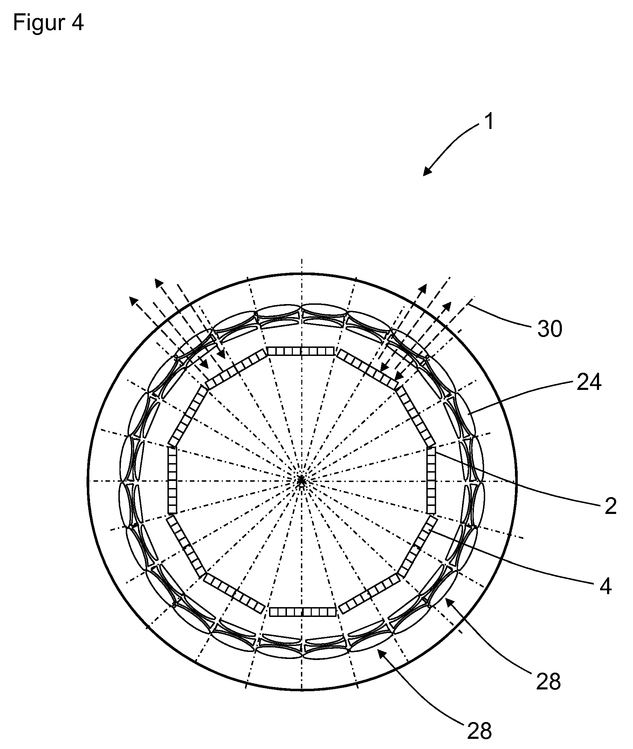

In Figur 4 ist beispielsweise ein Laserscanner 1 mit einem fächerförmigen Scanbereich von 360° dargestellt. Die Sendeelemente 2 und Empfangselemente 4 können wie bereits zur Figur 1 bis 3 erläutert angeordnet sein, wonach zwei parallele Ringe von Sendeelementen 2 bzw. Empfangselementen 4 vorgesehen sind. Es können dabei auch weitere Ringe von Sendeelementen 2 bzw. Empfangselementen 4 vorgesehen sein, so dass ein Kreiszylinder aus Sendeelementen 2 und Empfangselementen 4 gebildet wird.

Es kann jedoch auch vorgesehen sein, dass ein einziger Ring vorgesehen ist, der abwechselnd Sendeelemente 2 und Empfangselemente 4 aufweist, wie explizit in Figur 4 dargestellt. Gemäß Figur 4 ist beispielsweise vor jeweils zwei Sendeelementen 2 und zwei Empfangselementen 4 eine Linse 24 bzw. ein Linsensystem 28 angeordnet. Das Gehäuse ist ein transparenter kreiszylindrischer Körper.

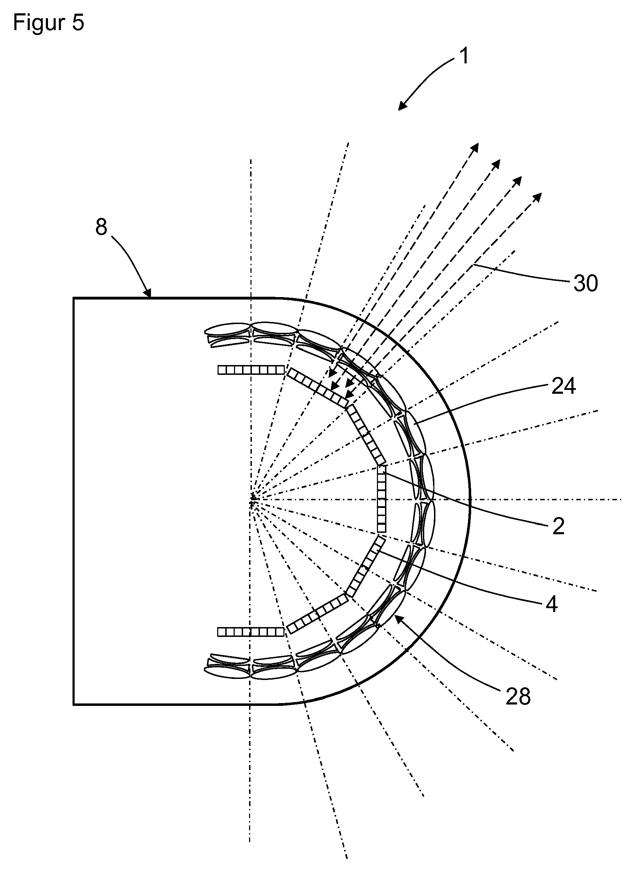

Figur 5 zeigt eine weitere Ausführungsform eines Laserscanners 1 mit einem fächerförmigen Scanbereich bzw. Überwachungsbereich von 210°. Dabei sind die Sendeelemente 2 und Empfangselemente 4 in zwei parallelen kreisabschnittsförmigen oder teilkreisförmigen Reihen wie in Figur 3 dargestellt angeordnet. In diesem Beispiel sind jeweils vier Sendeelementen 2 bzw. vier Empfangselementen 4 jeweils eine Linse 24 bzw. ein Linsensystem 28 zugeordnet.

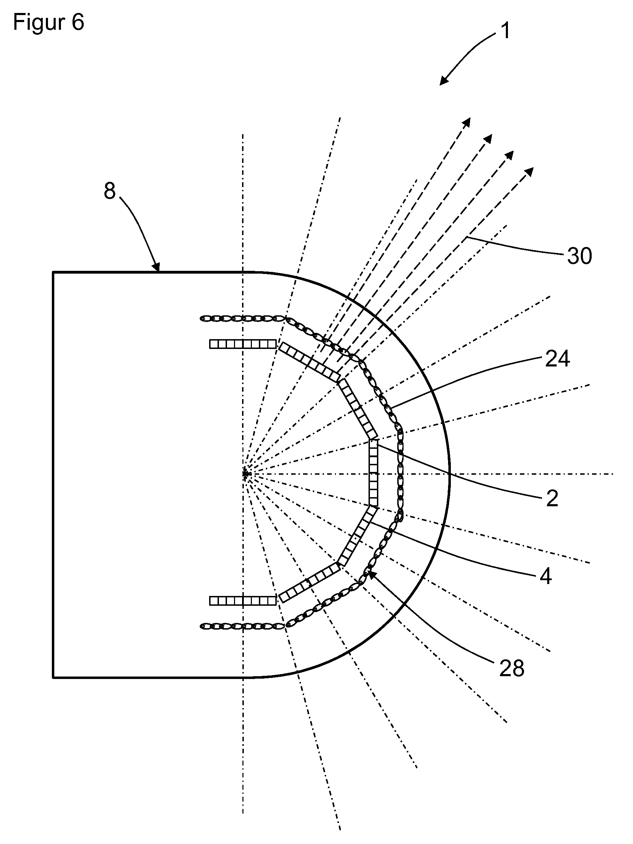

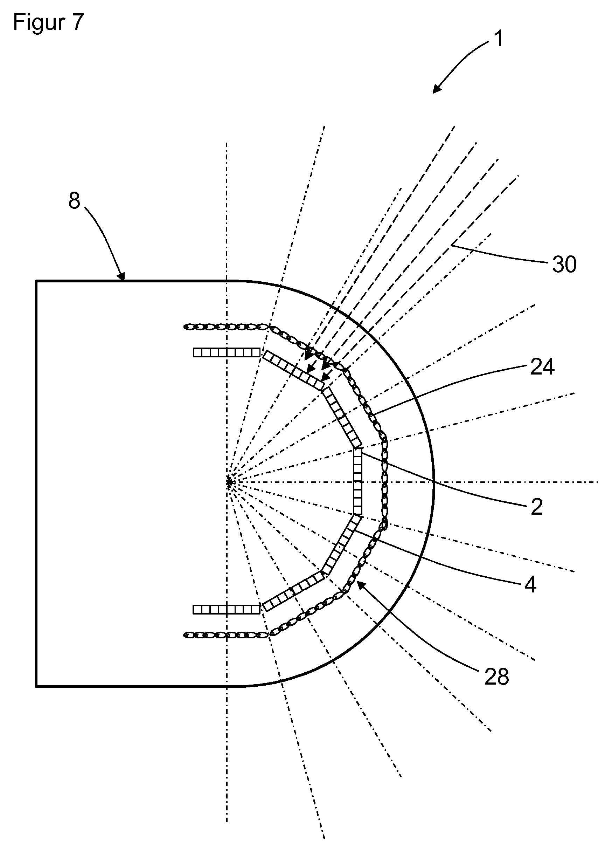

Figur 6 und 7 zeigen eine weitere Ausführungsform eines Laserscanners 1 mit einem fächerförmigen Scanbereich bzw. Überwachungsbereich von ca. 210°. Dabei sind die Sendeelemente 2 und Empfangselemente 4 in zwei parallelen kreisabschnittsförmigen oder teilkreisförmigen Reihen wie in Figur 3 dargestellt angeordnet. In diesem Beispiel ist jeweils jedem Sendeelement 2 bzw. jedem Empfangselement 4 jeweils eine Linse 24 bzw. ein Linsensystem 28 zugeordnet.

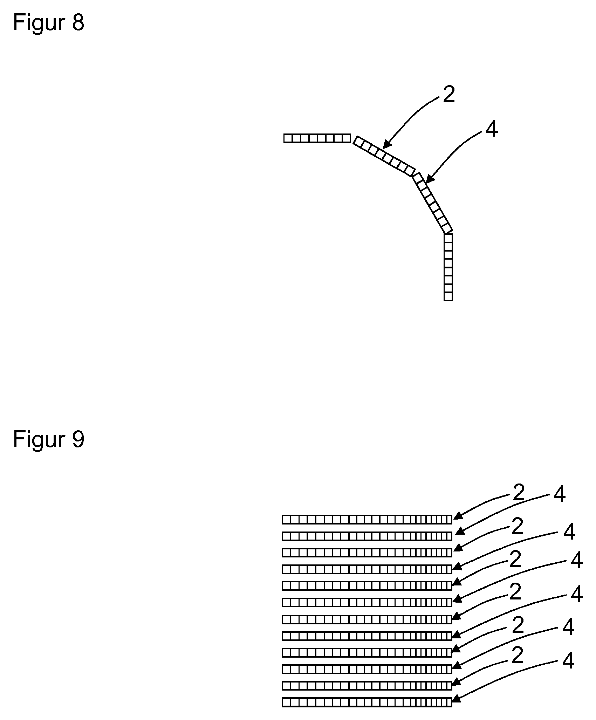

Figur 8 zeigt schematisch eine weitere Ausführungsform eines Laserscanners mit einem fächerförmigen Scanbereich bzw. Überwachungsbereich von 90°. Dabei sind die Sendeelemente 2 und Empfangselemente 4 in parallelen kreisabschnittsförmigen oder teilkreisförmigen Reihen wie in Figur 9 dargestellt angeordnet. Dadurch lässt sich ein teilzylindrischer Scanbereich oder Überwachungsbereich realisieren. Gemäß Figur 9 ist abwechselnd eine Reihe mit Sendeelementen 2 und eine Reihe mit Empfangselementen 4 angeordnet. Figur 9 entspricht der Ansicht gemäß Figur 3, wonach eine Frontansicht direkt auf die halbkreisförmige Gehäuseseite dargestellt ist.

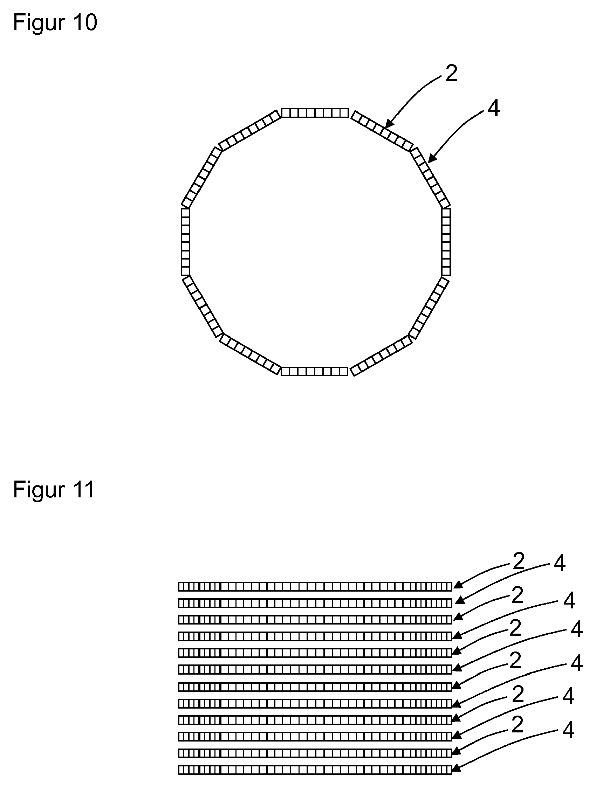

Der Aufbau gemäß Figur 9 kann auch für beliebige fächerförmige Scanbereiche mit Winkeln von 1 bis 360° realisiert werden, so dass beispielweise ein zylinderförmiger Scanbereich oder Überwachungsbereich gebildet wird, wie in Figur 10 und 11 dargestellt. Gemäß Figur 10 sind die Sendeelemente 2 und/oder die Empfangselemente 4 in einem Vollkreis angeordnet. Die Sendeelemente 2 und/oder Empfangselemente 4 sind gemäß Figur 11 in einer Matrix mit mindestens zwei Reihen angeordnet.

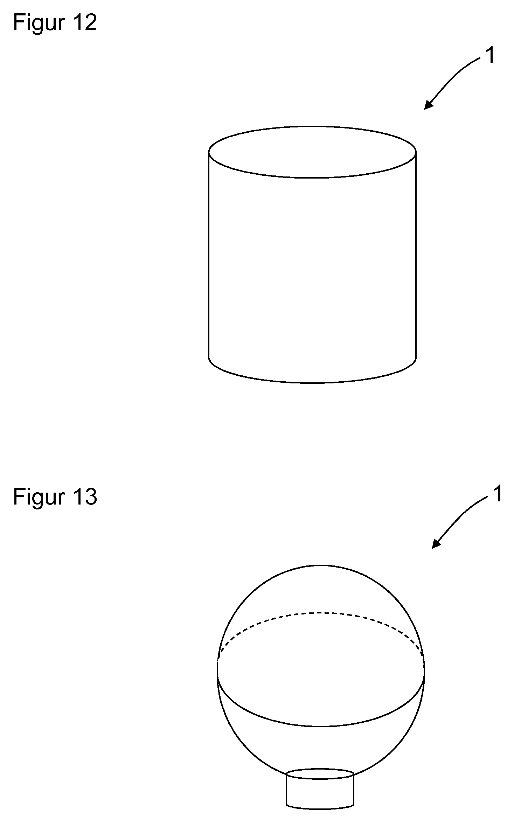

Figur 12 zeigt schematisch einen Laserscanner 1 gemäß den Figuren 10 und 11 in einer perspektivischen Ansicht.

Figur 13 zeigt schematisch einen Laserscanner 1 gemäß vorliegender Erfindung mit einem kugelförmigen Scanbereich oder Überwachungsbereich. Der Laserscanner 1 kann auch mit einem halbkugelförmigen oder teilkugelförmigen Scanbereich oder Überwachungsbereich gebildet werden.

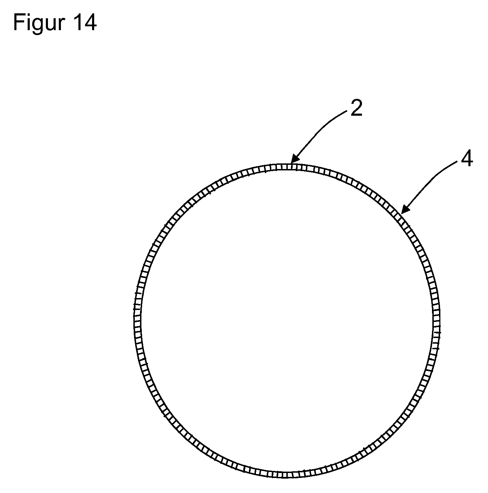

Figur 14 zeigt explizit eine Anordnung, bei der die Sendeelemente 2 und/oder Empfangselemente 4 teilkreisförmig, kreisabschnittsförmig oder kreisförmig gebogen angeordnet sind, wobei jedes Sendeelement 2 bzw. Empfangselement 4 in einem geringfügig anderen Winkel angeordnet ist. Diese Realisierung ist insbesondere mit einem dünnen Substrat möglich.

### Bezugszeichen:

- 1: Laserscanner
- 2: Sendeelement
- 4: Empfangselement
- 6: Steuer- und Auswerteeinheit
- 8: Gehäuse
- 10: Zeilenelemente
- 12: Matrix
- 14: Reihe
- 16: Teilkreis
- 18: Vollkreis
- 24: Linse
- 26: Mikrolinse
- 28: Linsensystem
- 30: Lichtstrahlen
- 32: Objekt

## Patentansprüche

1. Laserscanner mit mindestens einem Sendeelement (2) und mindestens einem Empfangselement (4) und einer Steuer- und Auswerteeinheit (6) zur Auswertung der Lichtlaufzeit von Lichtstrahlen vom Sendeelement (2) über ein Objekt (32) zum Empfangselement (4),
wobei eine Vielzahl von Sendeelementen (2) und eine Vielzahl von Empfangselementen (4) kreisabschnittsförmig in einem gemeinsamen Gehäuse (8) angeordnet sind, **dadurch gekennzeichnet, dass** die Lichtstrahlen (30) in verschiedenen Winkelrichtungen fächerförmig durch eine konvexe Oberfläche an einer Außenseite des Gehäuses ausgesendet und/oder empfangen werden, wobei sich die Abstände der ausgesendeten Lichtstrahlen der Sendeelemente mit größer werdendem Abstand zum Laserscanner vergrößern und/oder die Abstände der empfangenen Lichtstrahlen der Empfangselemente mit kleiner werdendem Abstand zum Laserscanner verkleinern, wobei die optischen Achsen der Sendeelemente bzw. Empfangselemente einen gemeinsamen Ursprung, bzw. einen gemeinsamen punktförmigen Ursprung im Gehäuse des Laserscanners haben und die Sendeelemente (2) und/oder die Empfangselemente (4) kreisabschnittsförmig äquidistant angeordnet sind.

2. Laserscanner nach Anspruch 1, **dadurch gekennzeichnet, dass** die Empfangselemente (4) von Photoempfängern als Zeilenelemente gebildet sind.

3. Laserscanner nach einem der vorhergehenden Ansprüche, **dadurch gekennzeichnet, dass** die Sendeelemente (2) und/oder die Empfangselemente (4) in einer Matrix mit mindestens zwei Reihen angeordnet sind.

4. Laserscanner nach einem der vorhergehenden Ansprüche, **dadurch gekennzeichnet, dass** die Sendeelemente (2) und/oder die Empfangselemente (4) in einem Vollkreis angeordnet sind.

5. Laserscanner nach einem der vorhergehenden Ansprüche, **dadurch gekennzeichnet, dass** die Sendeelemente (2) und/oder die Empfangselemente (4) auf einer flexiblen Leiterplatte angeordnet sind.

6. Laserscanner nach einem der vorhergehenden Ansprüche, **dadurch gekennzeichnet, dass** die Sendeelemente (2) und/oder die Empfangselemente (4) auf einem starren teilkreisförmigen, kreisabschnittsförmigen, kreisförmigen, teilzylinderförmigen, zylinderförmigen, teilkugelförmigen, kugelabschnittsförmigen oder kugelförmigen Kunststoffträger mit integrierten Leiterplatten angeordnet sind.

7. Laserscanner nach einem der vorhergehenden Ansprüche, **dadurch gekennzeichnet, dass** pro Winkelgrad mindestens ein Sendeelement (2) und/oder mindestens ein Empfangselement (4) angeordnet ist.

8. Laserscanner nach einem der vorhergehenden Ansprüche, **dadurch gekennzeichnet, dass** vor jedem Sendeelement (2) und/oder vor jedem Empfangselement (4) mindestens eine Linse (24) oder eine Mikrolinse (26) angeordnet ist.

9. Laserscanner nach einem der vorhergehenden Ansprüche, **dadurch gekennzeichnet, dass** die Linsen (24) oder Mikrolinsen (26) ein Linsensystem (28) bilden.

10. Laserscanner nach einem der vorhergehenden Ansprüche, **dadurch gekennzeichnet, dass** die Steuer- und Auswerteeinheit (6) von einem Logikbaustein, insbesondere vom Typ CPLD (Complex Programmable Logic Device) oder FPGA (Field Programmable Gate Array) gebildet ist.

## Claims

1. A laser scanner having at least one transmission element (2) and having at least one reception element (4) and having a control and evaluation unit (6) for evaluating the time of flight of light beams from the transmission element (2) via an object (32) to the reception element (4),
wherein a plurality of transmission elements (2) and a plurality of reception elements (4) are arranged in the form of a segment of a circle in a common housing (8), **characterized in that** the light beams (30) are transmitted and/or received in different angular directions in fan form by a convex surface at an outer side of the housing, with the spacings of the transmitted light beams of the transmission elements increasing as the distance from the laser scanner becomes larger and/or with the spacings of the received light beams of the reception elements decreasing as the distance from the laser scanner becomes smaller, with the optical axes of the transmission elements or reception elements having a common origin, i.e. a common punctiform origin, in the housing of the laser scanner and with the transmission elements (2) and/or the reception elements (4) being arranged equidistantly in the form of a segment of a circle.

2. A laser scanner in accordance with claim 1, **characterized in that** the reception elements (4) are formed by photoreceivers as line elements.

3. A laser scanner in accordance with one of the preceding claims, **characterized in that** the transmission elements (2) and/or the reception elements (4) are arranged in a matrix having at least two rows.

4. A laser scanner in accordance with any one of the preceding claims, **characterized in that** the transmission elements (2) and/or the reception elements (4) are arranged in a full circle.

5. A laser scanner in accordance with any one of the preceding claims, **characterized in that** the transmission elements (2) and/or the reception elements (4) are arranged on a flexible printed circuit board.

6. A laser scanner in accordance with any one of the preceding claims, **characterized in that** the transmission elements (2) and/or the reception elements (4) are arranged on a rigid plastic substrate having integrated printed circuit boards, the rigid plastic substrate being of the form of a part circle, of a segment of a circle, of a circle, of a part cylinder, of a cylinder, of a part sphere, of a segment of a sphere or of a sphere.

7. A laser scanner in accordance with any one of the preceding claims, **characterized in that** at least one transmission element (2) and/or at least one reception element (4) is/are arranged per angular degree.

8. A laser scanner in accordance with any one of the preceding claims, **characterized in that** at least one lens (24) or a microlens (26) is arranged in front of every transmission element (2) and/or in front of every reception element (4).

9. A laser scanner in accordance with any one of the preceding claims, **characterized in that** the lenses (24) or microlenses (26) form a lens system (28).

10. A laser scanner in accordance with any one of the preceding claims, **characterized in that** the control and evaluation unit (6) is formed by a logic module, in particular of the type CPLD (complex programmable logic device) or FPGA (field programmable gate array).

## Revendications

1. Scanneur laser comportant au moins un élément émetteur (2) et au moins un élément récepteur (4) et une unité de commande et d'évaluation (6) pour évaluer le temps de parcours des rayons lumineux depuis l'élément émetteur (2) jusqu'à l'élément récepteur (4) via un objet (32),
dans lequel
une multitude d'éléments émetteurs (2) et une multitude d'éléments récepteurs (4) sont agencées en forme de segment de cercle dans un boîtier commun (8),
**caractérisé en ce que**
les rayons lumineux (30) sont émis et/ou reçus dans différentes directions angulaires en forme d'éventail à travers une surface convexe sur un côté extérieur du boîtier, des distances des rayons lumineux émis des éléments émetteurs s'agrandissant au fur et à mesure de l'augmentation de la distance au scanneur laser, et/ou des distances des rayons lumineux reçus des éléments récepteurs se réduisant au fur et à mesure d'une réduction de la distance au scanneur laser, les axes optiques des éléments émetteurs ou des éléments récepteurs ayant une origine commune ou une origine ponctuelle commune dans le boîtier du scanneur laser, et les éléments émetteurs (2) et/ou les éléments récepteurs (4) étant agencés de façon équidistante en forme de segment de cercle.

2. Scanneur laser selon la revendication 1, **caractérisé en ce que** les éléments récepteurs (4) sont formés comme éléments formant ligne par des photorécepteurs.

3. Scanneur laser selon l'une des revendications précédentes, **caractérisé en ce que** les éléments émetteurs (2) et/ou les éléments récepteurs (4) sont agencés dans une matrice présentant au moins deux rangées.

4. Scanneur laser selon l'une des revendications précédentes, **caractérisé en ce que** les éléments émetteurs (2) et/ou les éléments récepteurs (4) sont agencés dans un cercle entier.

5. Scanneur laser selon l'une des revendications précédentes, **caractérisé en ce que** les éléments émetteurs (2) et/ou les éléments récepteurs (4) sont agencés sur une carte à circuits imprimés flexible.

6. Scanneur laser selon l'une des revendications précédentes, **caractérisé en ce que** les éléments émetteurs (2) et/ou les éléments récepteurs (4) sont agencés sur un support rigide en matière plastique en forme de cercle partiel, de segment de cercle, de cercle, de cylindre partiel, de cylindre, de sphère partielle, de segment sphérique ou de forme sphérique, comprenant des cartes à circuits imprimés intégrées.

7. Scanneur laser selon l'une des revendications précédentes, **caractérisé en ce qu'**au moins un élément émetteur (2) et/ou au moins un élément récepteur (4) est agencé par degré angulaire.

8. Scanneur laser selon l'une des revendications précédentes, **caractérisé en ce qu'**au moins une lentille (24) ou une microlentille (26) est agencée en avant de chaque élément émetteur (2) et/ou en avant de chaque élément récepteur (4).

9. Scanneur laser selon l'une des revendications précédentes, **caractérisé en ce que** les lentilles (24) ou microlentilles (26) forment un système de lentilles (28).

10. Scanneur laser selon l'une des revendications précédentes, **caractérisé en ce que** l'unité de commande et d'évaluation (6) est constituée par un composant logique, en particulier du type CPLD (Complex Programmable Logic Device) ou FPGA (Field Programmable Gate Array).
